# FASCICULE DE BREVET EUROPEEN

(11) **EP 2 737 247 B1**
(45) Date de publication et mention de la délivrance du brevet: **03.07.2019**
(21) Numéro de dépôt: 12753766.0
(22) Date de dépôt: 30.07.2012
(51) Int. Cl.: F21V 33/00, A47F 3/00, G02B 6/00, B32B 17/10, F21W 131/301, F21Y 105/00, F21V 31/00

(54) **VITRAGE MULTIPLE LUMINEUX DE MEUBLE**
LEUCHTENDE MEHRFACHVERGLASUNGSEINHEIT FÜR EIN MÖBELSTÜCK
LUMINOUS MULTIPLE GLAZING UNIT FOR AN ITEM OF FURNITURE

(30) Priorité: 29.07.2011 FR 1157013
(43) Date de publication de la demande: 04.06.2014
(73) Titulaire: Saint-Gobain Glass France, 92400 Courbevoie (FR)
(72) Inventeur: KLEO, Christophe, 60350 Attichy (FR); GRANDGIRARD, Bastien, 60490 Marqueglise (FR); RICHARD, Alexandre, 75019 Paris (FR); VERRAT-DEBAILLEUL, Adèle, 60150 Villers-sur-coudun (FR); BÄUERLE, Pascal, 80700 Roye (FR)
(74) Mandataire: Saint-Gobain Recherche
(86) Numéro de dépôt international: PCT/FR2012/051794
(87) Numéro de publication internationale: WO 2013/017792

(56) Documents cités:
- EP-A1- 1 154 199
- EP-A1- 1 655 536
- EP-A2- 1 491 835
- US-A1- 2004 031 234
- US-A1- 2010 073 959

## Description

La présente invention concerne les vitrages multiples de porte de meuble notamment réfrigéré, et en particulier les vitrages multiples lumineux de porte de meuble notamment réfrigéré, notamment à diodes électroluminescentes.

On connaît un vitrage isolant destiné à l'ouvrant d'une enceinte réfrigérée, enceinte dans laquelle sont exposés des produits froids ou surgelés, tels que des produits alimentaires ou boissons, ou tous autres produits nécessitant une conservation dans le froid, par exemple des produits pharmaceutiques ou même des fleurs. Le vitrage isolant est constitué d'au moins deux substrats verriers séparés par une lame de gaz et pourvus pour au moins l'un d'eux d'un revêtement bas émissif.

Lorsque des produits conservés dans une enceinte réfrigérée doivent rester visibles comme c'est le cas dans de nombreux locaux commerciaux actuels, on équipe l'enceinte réfrigérée de parties vitrées qui la transforment en une " vitrine " réfrigérée dont la dénomination commune est " meuble frigorifique de vente ". Il existe plusieurs variantes de ces " vitrines ". Certaines ont la forme d'armoire et alors, c'est la porte elle-même qui est transparente, d'autres constituent des coffres et c'est le couvercle horizontal qui est vitré pour permettre l'observation du contenu.

Dans ces types de présentoirs, il est nécessaire que les marchandises restent parfaitement visibles de la clientèle afin qu'il soit possible de présélectionner les marchandises sans ouvrir la " vitrine ".

Cependant, l'un des problèmes principaux rencontrés pour ces vitrines est l'apparition de buée sur la face extérieure de l'ouvrant se situant côté magasin. En effet, cette face extérieure est refroidie par l'ambiance réfrigérée se trouvant à l'opposé, côté face intérieure en contact de l'ambiance intérieure de l'enceinte, tout en étant en contact avec l'atmosphère ambiante du magasin, bien plus chargée en humidité, et à une température bien plus élevée ; lorsque la température de cette surface extérieure est à une température inférieure au point de rosée, il apparaît de la buée ce qui gêne la visibilité des marchandises.

Un autre problème important est également la formation de buée, voire même de givre sur la face intérieure de l'ouvrant lorsque l'on ouvre la vitrine pour prendre les marchandises. En effet, la surface du substrat verrier intérieur qui se trouvait être à une température très basse, voire en-dessous de 0°C, se trouve alors en contact de l'atmosphère ambiante, bien plus chargée en humidité, et à une température bien plus élevée ; la température du substrat intérieur est alors inférieure à la température du point de rosée, ce qui engendre un phénomène de condensation sur le substrat, voire même de givre lorsque la température de ce substrat est négative. La présence de buée ou de givre gêne la visibilité des marchandises, et il faut plusieurs minutes, voire dizaines de minutes, pour obtenir une totale disparition de la buée ou du givre.

Pour limiter ces inconvénients, il a été conçu dans l'art antérieur, des vitrages isolants à propriété d'isolation thermique renforcée, à savoir des doubles ou triples vitrages pourvus d'un ou de plusieurs revêtements bas émissifs, et dont le substrat en contact avec l'intérieur de l'enceinte est chauffant. Le document US 2004/0031234 A1 divulgue un double vitrage éclairant avec un profilé en U dont le volume intérieur loge des DEL en regard de la tranche de l'une des feuilles de verre.

On connaît par ailleurs d'après la demande de brevet WO 03/008877, un vitrage à isolation thermique renforcée pour enceinte réfrigérée qui assure, selon ce document, la disparition de buée sur la face extérieure de l'ouvrant, du côté magasin.

Ce type de vitrage isolant consiste en un triple vitrage comprenant trois substrats verriers de 3 mm d'épaisseur, espacés par des lames de gaz d'épaisseur identique de 8 ou 13 mm et constituées d'air, d'argon ou de krypton, deux revêtements bas émissifs étant disposés sur les faces 2 et 5 du vitrage (en comptant à partir de la face la plus extérieure du vitrage en position fermée sur l'enceinte).

La fonction lumière n'est, quant à elle, pas optimisée

Aussi, la présente invention vise un vitrage multiple lumineux de porte de meuble notamment (réfrigéré) à source de lumière écologique et efficace (diodes électroluminescentes, fibre(s) optique(s) couplé à des diodes par exemple), robuste et aisément évolutif, tout en restant simple et compact, répondant ainsi au cahier des charges imposés par les fabricants (garantie constructeur, adaptabilité des performances...).

L'invention propose à cet effet un vitrage multiple lumineux de porte de meuble notamment réfrigéré comportant :
- une première feuille en verre minéral ou organique (PC, PMMA, PU, voire résine ionomère, polyoléfine, épaisse ou mince), présentant une première face principale et une deuxième face principale et une tranche,
   - une deuxième feuille espacée de la première feuille -par une lame de gaz (air ou gaz inerte)-,
   - une éventuelle troisième feuille espacée par une lame de gaz (air ou gaz inerte)
- une source lumineuse périphérique avec un profilé support dit support de source, source choisie parmi une fibre optique autosupportée de type cordon avec une partie latérale formant la zone émettrice et parmi des diodes électroluminescentes comportant chacune une puce semi-conductrice avec une face émettrice, le profilé support des diodes, étant de type carte à circuit imprimé, la zone ou face émettrice étant en regard de la tranche, dite d'injection, de la première feuille pour une propagation de la lumière injectée visible et/ou ultraviolet dit UV dans l'épaisseur de la première feuille, la première feuille jouant alors le rôle de guide de la lumière injectée,
- des moyens d'extraction de la lumière guidée pour former au moins une zone lumineuse,
- le support de source étant dans un logement entouré par de la matière (évidée par exemple), formant un entourage, incluant un élément d'assemblage, notamment fonctionnel, notamment qui est étanche au(x) fluide(s), notamment à l'eau liquide voire vapeur, qui est (une pièce) rapporté ou un surmoulage et couvert par un capot (sur l'élément d'assemblage) notamment qui est étanche au(x) fluide(s), notamment à l'eau liquide voire vapeur et poussières,
- le capot et le support de source, notamment de diodes étant démontables du vitrage (support démontable seul ou avec le capot), en particulier le capot est démontable de l'élément d'assemblage.

L'intégration de la source telle qu'une barrette à LEDs est difficile voire impossible dans le cas d'une extrusion ou d'une pièce moulée du fait du risque de dégradation de la fonction lumière, vitrage et joint.

Une encapsulation totale « monolithique », notamment de surmoulage (encapsulât...) ou à un enrobage de colle, d'adhésif, dans laquelle la source lumineuse (comme par exemple les barrettes de DEL) est entièrement encapsulées rend la source lumineuse difficilement accessible sous peine de l'abimer (vitrage/LED, encapsulation...) et d'empêcher la réutilisation de ce vitrage. En outre, l'encapsulation totale est délicate et peut détériorer la source en particulier les LEDS (et/ou leur circuit électronique) déjà montées, induisant les coûts de rebuts important, sauf à prendre des précautions rendant la fabrication complexe.

L'invention consiste donc en la réalisation d'un vitrage dont la source lumineuse (LEDs, Fibre Optiques) est rapportée dans un logement prévu à cet effet en périphérie du vitrage.

On peut réaliser l'intégration d'une source lumineuse sans diminuer le clair de vue. On peut réaliser une pièce avec un profilé flush par collage ou surmoulage intégrant la source lumineuse, facilitant ainsi le nettoyage de la zone vitrée.

Naturellement le vitrage multiple peut comprendre :
- une couche anti givre,
- et/ou une couche bas-émissive,
- et/ou une couche chauffante,

De préférence, la deuxième feuille et une troisième feuille comporte une ou ces couches et la feuille guide de lumière ne comporte pas éventuellement une ou deux de ces couches notamment sur la face ou au moins la zone d'extraction de lumière.

Dans la solution selon l'invention, le capot est facile à (re)positionner, notamment sur l'élément d'assemblage, retirable (démontable et/ou arrachable et remplaçable à moindre coût) si nécessaire :
- pour changer la source de lumière (des DEL etc) et/ou leur pilotage électronique lors de réparation, ou de recyclage ou encore
- pour faire face à de nouvelles d'exigences de performances optiques souhaitées par le client (changement de couleur(s), de puissance, de fréquence, de commande) ou par de nouvelles normes imposées,
- et/ou pour (r)ajouter des sources (DEL et/ou fibre optique) et/ou des pilotages électroniques dans un vitrage avec l'évidement.

L'invention facilite ainsi la modularité de l'éclairage proposé sur le vitrage (vitrage éclairant ou pouvant de le devenir, variation de couleur, intensité...) - au niveau de la gestion logistique des flux en production (montage en dépôt avancé plutôt qu'à la demande du client).

L'invention réduit l'impact de l'intégration de la source (DEL etc) sur le choix des procédés et matières et permet de ne pas être dépendant d'une technologie de réalisation car elle offre un large panel de solutions de pré-montage ou d'encapsulation utilisables.

L'invention rend possible la fabrication d'un vitrage multiple lumineux de porte de meuble notamment (réfrigéré) avec un élément fonctionnel, rapporté sur le vitrage de manière habituelle, notamment fabriqué selon les techniques habituelles (extrudé, moulé...), l'élément fonctionnel pouvant être modifié de manière appropriée (évidé) pour loger les LEDs en post montage.

Le capot à la fois protège et procure un accès facile à la source lumineuse et participe de préférence à son maintien/positionnement dans le logement.

Le capot peut être dit essentiellement facial (parallèle, suivant le plan moyen du vitrage), ou est latéral (parallèle, suivant le plan moyen de la tranche d'injection).

Le capot est distinct de l'élément d'assemblage (distinct d'une feuille en verre minéral) et est de préférence :
- mis en position, notamment mécaniquement, par exemple par des butées, sur l'élément d'assemblage et non sur un verre minéral
- et/ou est maintenu en position sur l'élément d'assemblage et de préférence non sur un verre minéral.

De préférence, la distance entre la face ou zone émettrice (espacée de la tranche) et la tranche d'injection peut être inférieure à 2 mm, voire à 1 mm, notamment de 0,2 à 2 mm voire de 0,5 à 1 mm.

Les moyens de maintien en position du capot (sur un élément rigide ou souple) sont réversibles (amovibles) et de préférence :
- des moyens de clipsage, (de préférence sur un élément rigide) : simple et double clip, type sapin ou type monobranche
- des moyens de vissage, (de préférence sur un élément rigide)
- des moyens de type scratch
- des moyens d'aimantation
et/ou les moyens de maintien en position du support de source porté éventuellement par le capot sont réversibles et notamment :
- des moyens de clipsage, (de préférence sur un élément rigide) : simple et double clip, type sapin ou type monobranche
- des moyens de vissage, (de préférence sur un élément rigide)
- des moyens de type scratch
- des moyens d'aimantation
ou éventuellement permanent si porté par le capot (colle etc).

Les moyens de clipsage (capot sur entourage ou support / capot) peuvent être ponctuels (ergots ...) ou étendus (c'est-à-dire s'étendant sur toute la longueur du capot), agencés sur la face interne du capot, de préférence faisant partie intégrante du capot, (de préférence dans la zone d'étanchéité définie par un élément d'étanchéité interfaciale).

Les moyens de clipsage, sont par exemple de type crochet, faisant partie intégrante du capot ou ajoutés indépendamment.

Les moyens de vissage, (tels que vis, boulon) peuvent dépasser de la face interne, (par exemple logés dans des perforations du capot ou faisant partie intégrante du capot facial, éventuellement via des trous borgnes), notamment entre un élément d'étanchéité interfaciale et le bord du logement.

Une ou des butées sont utiles pour la mise en position du support et/ou du capot.

De préférence on évite tout système adhésif (colle) même réversible ainsi que tout montage en force du capot ou du support de source sur l'élément d'assemblage (ou sur le capot).

Pour le démontage du capot et/ou du support de source on peut prévoir des moyens de préhension notamment: encoche, boucle, renfoncement, tige, zone de fragilité... etc démontabilité par outil de préférence.

Le support à source peut être démontable du vitrage parce qu'il est porté par le capot démontable du vitrage. Le support peut être fixé de manière permanente (non aisément démontable) au capot. C'est le cas ou l'on préfère changer tout l'ensemble capot+ support de source.

Le capot n'a pas forcément de rôle dans le maintien en position du support de source alors le maintien en position est de préférence (en partie au moins) géré par un élément d'assemblage.

Le logement peut être de toute forme possible : oblongue, ovale, rectangulaire...

La largeur du logement peut être comprise entre 5 et 200 mm et de préférence entre 10 et 40 mm.

La longueur du logement peut être comprise entre 10 et 1000 mm, de préférence entre 50 à 600 mm.

La profondeur du logement est suffisante par exemple de 1 mm à 100 mm, de préférence de 2 à 20 mm (voire moins si en regard de la tranche).

La matière entourant le support de source est étanche aux fluides (élément d'assemblage et/ou surmoulage par exemple) et le capot est étanche aux fluides.

Le capot peut être associé à un élément interfacial, pour l'étanchéité interfaciale au(x) fluide(s) et à la poussière, notamment à l'eau liquide voire vapeur.

L'élément d'étanchéité interfaciale au(x) fluide(s), local, est par exemple en périphérie de la face interne du capot ou sur un côté du capot, notamment l'élément d'étanchéité interfaciale au(x) fluide(s) forme un cordon.

Ainsi le vitrage multiple lumineux est durable, même lorsque le vitrage n'est pas protégé, ceci grâce aux moyens d'étanchéité simples et adaptés, supprimant des chemins de diffusion de fluide(s).

Par ailleurs, l'élément d'assemblage associé au capot et à l'éventuel élément d'étanchéité interfaciale est utile en particulier pour une protection contre l'humidité de la source, notamment des puces, pour éviter une pollution de l'espace de couplage (salissures, pollution organique, type moisissures...) et de préférence aux produits de nettoyage, ou à un lavage par jet à haute pression. Cette protection doit être pérenne.

Pour faciliter le démontage et le remontage, l'élément d'étanchéité interfacial, de préférence en périphérie du capot, peut être une matière comprimée, l'étanchéité par compression de la matière étant réalisée par un effort de fermeture des moyens de fixation du capot, notamment l'élément d'étanchéité interfacial est choisi parmi :
- un joint polymérique par exemple en TPE, en EPDM notamment un joint torique, à lèvre(s) d'étanchéité, le joint étant notamment dans un dégagement ou une rainure du capot, ou une rainure dans un entourage (élément fonctionnel, élément d'assemblage) ou de la deuxième face,
- un profil d'étanchéité sur l'entourage (notamment l'élément fonctionnel, l'élément d'assemblage), choisi polymérique, par exemple lèvre(s) d'encapsulât ou de joint prémonté, notamment en EPDM, ou sur la face interne ou un côté du capot polymérique,
- une mousse, notamment mousse acrylique, PU, caoutchouc (EDPM..), thermoplastiques élastomères, en TPE, en polyester, notamment en polyester caoutchouc monocomposant tel que le produit Dynafoam vendu par la société Saint-Gobain Performance Plastics.

On peut ainsi s'affranchir de l'usage d'adhésif d'étanchéité.

Alternativement ou cumulativement, le support de diodes au moins (voire les puces) est pourvu, avantageusement avant son intégration dans le vitrage (lors de leur fabrication...), d'au moins une couche de protection mono ou multicouche) contre l'humidité et/ou d'une encapsulation telle qu'un vernis de type silicone, époxy ou acrylique.

Cela permet une intégration aisée dans le logement prévu dans le vitrage (intégration ne nécessitant pas une gestion complexe de l'étanchéité entre l'évidement et le milieu extérieur).

Plus précisément, la couche de protection protège au moins circuit imprimé, soudures, connecteurs si pas étanches.

Les diodes (au moins la face émettrice) sont de préférence pas protégées ainsi si déjà recouvertes (pré encapsulées) de silicone.

On protège les barrettes de LEDs avant de les intégrer dans le logement (évidement de l'élément fonctionnel etc). La protection peut être du type vernis de protection (silicone, epoxy, acrylique...), encapsulation ou « potting » de la barrette de LEDs (silicone, epoxy, acrylique...).

On peut citer les vernis de tropicalisation vendu par Syneo, avec une base acrylique ou PU ou Silicone.

On peut citer le vernis de protection Abchimie. La dépose est par immersion, dépose sélective ou vaporisation (couches de 25-50 microns).

Grâce à la couche de protection, l'étanchéité parfaite entre la surface du capot et l'entourage n'est plus indispensable mais peut venir en complément. On peut aussi cumuler les deux solutions d'étanchéité pour plus de sécurité, ou alors pour éviter une dégradation du module due à l'humidité dans l'air emprisonné dans la cavité une fois le capot monté.

A tout le moins, le capot n'est pas nécessairement étanche (aux fluides). Il protège de préférence des entrées de matière qui viendrait se mettre entre les diodes-la source et la tranche d'injection mais pas d'étanchéité à l'humidité et à l'eau liquide nécessaire. Le capot peut être percé pour le passage de fil par exemple.

Ainsi on facilite la conception de l'interface entre le capot et l'élément d'assemblage et on facilite le procédé de fabrication du vitrage.

Le capot peut comprendre en outre un évidement borgne pour le passage de la connectique et peut comprendre en outre :
- l'intégration éventuelle des fils et connectiques d'alimentation électriques (par exemple d'une barrette de diodes à l'autre) préalablement à l'intégration des diodes (surmoulage des fils ou prévoir des gorges dans le module...),
- de faciliter la sortie des fils par rapport à des connecteurs de l'alimentation principale (pouvant être la batterie, une source photovoltaïque...) au niveau de la zone de capotage par le biais d'une broche intégrée.

En outre, à partir d'un évidement de dimension prédéterminé et d'un capot porteur de la source, l'invention permet un bon positionnement de la diode par rapport à la zone d'injection de la lumière.

La distance entre la face ou zone émettrice et la tranche d'injection est contrôlée par des moyens de mise en position et des moyens de maintien en position, dit de blocage, du support de source dans les trois directions d'un repère orthogonal, lesdits moyens de mise en position et de blocage comportant un système d'assemblage du support de source, lié à la première feuille, incluant un élément d'assemblage positionné par rapport à la tranche d'injection.

Selon l'invention on peut par exemple définir un repère XYZ dans lequel :
Z est la direction longitudinale de la tranche d'injection
Y est la direction transversale de la tranche d'injection (normale aux faces générales du vitrage donc)
X est la direction normale à la tranche d'injection (parallèle aux faces générales du vitrage donc).

La mise en position du support à source sur le capot peut être géré par le process (positionnement calculé par la trajectoire d'un robot) ou de préférence mécaniquement par des butées pour simplifier la gestion du remplacement.

La mise en position du support à source en regard de la tranche d'injection peut être gérée par le process (positionnement calculé par la trajectoire d'un robot) ou de préférence mécaniquement par des butées pour simplifier la gestion du remplacement.

Le système d'assemblage du support de source inclut de préférence le capot.

Par ailleurs, on maîtrise la distance entre la face ou zone émettrice de la source et la tranche d'injection grâce aux moyens d'alignement selon l'invention que sont les moyens de mis en position du support de source (et de préférence du capot) et de maintien en position du support de source (et de préférence du capot).

La face ou zone émettrice (pour la diode, de préférence puce avec sa préencapsulation - type silicone etc) peut approcher de manière contrôlée le plus proche possible de la tranche d'injection sans risque de contact avec la tranche.

On parvient dans un mode préféré selon l'invention à verrouiller l'ensemble des pièces mises en oeuvre pour le montage de la source : élément d'assemblage (de fixation), de préférence capot, et support de source (support de diodes ou fibre autosupportée).

Le capot (de forme courbe, plane, en L ...) est une pièce suffisamment rigide pour le verrouillage.

L'élément d'assemblage, distinct de la feuille de verre (minéral) ou de guidage, est une pièce rapportée et/ou un revêtement de type surmoulage, est de préférence suffisamment rigide pour le verrouillage.

De préférence, le positionnement du support de source (et de préférence du capot porteur ou non du support) ne se fait pas sous contrainte car cela implique une déformation trop importante et ainsi ne permet pas de contrôle précis de la position : il n'y a pas une position unique possible, mais plusieurs.

Les moyens de mise en position du capot, notamment sur l'élément d'assemblage sont de préférence par contact(s) sans déformation de l'élément d'assemblage, notamment choisi parmi des moyens mécaniques tels que :
- butées dans l'élément d'assemblage pour le capot porteur du support, notamment butée inclinée, appui plan ou linéaire, appui ponctuel, rotule, pivot.

Les moyens de mise en position du support sur le capot de préférence
- soit sont par contact(s) sans déformation du capot, notamment choisi parmi des moyens mécaniques tels que butées, notamment appui plan ou linéaire, ponctuel, rotule, pivot, par maintien permanent par bouterolage ou démontable par clip
- soit par liaison serrée (montage en force ...) ou les moyens de mise en position du support sur l'élément d'assemblage sont par contact(s) sans déformation du support de source, notamment choisi parmi des moyens mécaniques tels que butées, notamment appui plan ou linéaire, ponctuel, rotule, pivot, (avec des maintien en position de type bouterollage par exemple)

Les moyens de maintien en position du support sont de préférence par contact(s) sans déformation globale de l'élément d'assemblage (pas de déformation ou déformation locale sans influence sur le positionnement, une fois monté), notamment choisi parmi des moyens mécaniques.

Les moyens de maintien en position du capot, notamment sur l'élément d'assemblage, sont de préférence distincts des moyens de mise en position du capot (sinon cette grande pièce peut bouger) et/ou les moyens de maintien en position du support de source sont distincts de préférence des moyens de mise en position du support de source.

L'élément d'assemblage par exemple:
- est une pièce (rapportée sur la première feuille) annulaire monolithique, donc creuse à contours fermés, sur le pourtour du logement, en plastique suffisamment rigide et/ou en métal,
- ou est une pièce (rapportée au vitrage) en plusieurs parties disjointes, en plastique suffisamment rigide et/ou en métal,
- ou est en une matière d'encapsulation polymérique, surmoulée à la première feuille avec un évidement local pour loger la source, notamment en plastique suffisamment rigide, une paroi délimitant l'évidement est par exemple positionnée par rapport à la tranche d'injection,.

Le support peut être positionné dans l'élément d'assemblage par les moyens de mise en position, et de préférence le capot comporte ou coopère avec des éléments, qui en position montée du capot, sont les moyens de maintien en position du support dans la pièce (l'élément) d'assemblage.

Ainsi le support de diodes est (pré)positionné indépendamment du capot sur l'élément d'assemblage, sans fixation permanente telle que collage, par des butées de positionnement par rapport à l'élément d'assemblage (en matière suffisamment rigide) et un élément souple, notamment de type languette courbe ou ressort, appuie sur e support et forme le moyen de maintien en position du support.

Le capot peut porter le support de source qui est positionné à l'aide d'éléments de mise en position et de maintien en position (provisoire ou permanent) suivant les trois axes du repère orthogonal et le capot est positionné par rapport à l'élément d'assemblage et/ou à la tranche du verre (butée par exemple normale à la face interne d'un capot latéral, saillante par rapport aux diodes et en butée contre la tranche d'injection hors zone de diodes) à l'aide d'autres éléments de mise en position et de maintien en position suivant les trois axes.

Le montage du capot, éventuellement porteur du support à source ou porteur de maintien en position du support à source prépositionné, étant par rotation et fixation réversible.

Par exemple ledit capot a une base longitudinale-(éventuellement base plus étendue que le logement)-avec des première et deuxième parties :
- la première partie (extrémité) étant en appui sur une première partie de l'élément d'assemblage dite partie de guidage en rotation, la première partie est (montée) mobile en rotation par rapport au vitrage, suivant d'un axe de rotation (axe fixe ou mobile suivant l'assemblage notamment parallèle (par exemple décalé) à la tranche d'injection (au plan moyen si tranche d'injection courbe ou biseautée), partie métallique et/ou en plastique suffisamment rigide de préférence,
- la deuxième partie portant des moyens de maintien en position du capot réversibles, de préférence reçus dans une ou des zones dites d'accueil d'une deuxième partie de l'élément d'assemblage, dite partie de liaison, ou inversement la deuxième partie portant une ou des zones dites d'accueil recevant des moyens de maintien en position du capot réversibles d'une deuxième partie de l'élément d'assemblage, notamment métallique et/ou en plastique suffisamment rigide, dite partie de liaison, éventuellement reçu dans une matière souple (encapsulation polymérique) pour un maintien de type scratch.

Le montage par rotation - fixation provisoire limite les risques que la source lumineuse se cogne sur la matière entourant le logement à diodes notamment sur la tranche du verre et donc se casse.

Le montage par rotation - fixation provisoire nécessite peu de dégagement en « Y » (pour la cinématique de fixation), Y étant la direction normale au vitrage si le capot est facial (dans le plan général du vitrage) ou en « X » parallèle au vitrage si le capot est latéral (dans le plan de la tranche). Cela donne donc une meilleure accessibilité au montage et au démontage.

En outre la rotation offre une plus grande liberté de conception notamment de l'orientation des moyens de maintien en position provisoires par rapport à la tranche d'injection.

Une fixation provisoire extérieure au logement (clipsage, vissage) permet de réduit la taille du logement.

Le montage par rotation - clipsage est simple car est réalisé en une opération pour le cas où la source (support de diodes ou fibre optique) est fixée (de manière provisoire/ démontable) sur le capot.

Le montage par rotation - pose du capot puis vissage permet un démontage sans dégradation du capot (donc réutilisable). La conception du capot et de la pièce d'assemblage est simplifiée car c'est une pièce extérieure (vis) qui assurer le maintien en position / la fixation réversible....

Un double clippage du capot sur l'élément d'assemblage (de préférence en plastique rigide ou en métal) est possible, demande peu d'encombrement en largeur (en X si capot facial, en Y si latéral), notamment par rapport à une rotation dans un cas avec un support (PCB) large, mais nécessite du dégagement (en Y) pour la cinématique de clippage.

La partie de liaison de l'élément d'assemblage est en matière apte à maintenir en place le capot de manière pérenne et lors de sollicitations, autrement dit la matière doit être suffisamment rigide, résistante mécaniquement.

Dans le cas plastique, l'ensemble partie de guidage - élément fonctionnel (plastique souple) peut être obtenu par co-extrusion (cas plastique) ou injection bi-matière.

Dans le cas métal, l'ensemble partie de guidage - élément fonctionnel (plastique souple) peut être obtenu
- par co-extrusion (matière plastique, notamment TPE, EPDM), des roulettes à l'entrée de la filière permettent de garantir le bon positionnement du feuillard et des épaisseurs mini de passage matière, des étapes supplémentaires de perçage ou découpe pouvant être nécessaires pour dégager notamment un ou des raidisseurs dans les sections où se trouvent les LED) ;
- par moulage/injection (plutôt TPE, PVC) bi-matière, des plots dans le moule permettant de garantir le bon positionnement du feuillard et des épaisseurs mini de passage matière.

Un élément fonctionnel peut notamment entourer la partie de guidage.

L'âme métallique (feuillard) est formée par exemple par pliages successifs (roll forming) de préférence, ou par emboutissage.

On peut prévoir différents moyens pour la rotation :
- la première extrémité est en partie biseautée et la partie de guidage en rotation comprend, de préférence une pluralité de zones réceptrices (pattes, de type charnière mais sans véritable « liaison » du capot à l'élément d'assemblage) de la première extrémité du capot, le long du capot, et de préférence décalés d'une ou des zones d'accueil locales, le long du capot, des moyens de fixations réversibles du capot,
- la première extrémité et la partie de guidage ont des formes complémentaires : demi-sphères, rotules à doigt(s) ...

L'élément d'assemblage peut comprendre, dans une zone non émettrice, une partie en regard voire en contact avec la tranche d'injection servant pour référencer à la tranche d'injection et formant un raidisseur (réunissant par exemple la partie de guidage et la partie de fixation dans un montage par rotation et fixation provisoire).

Le capot et l'entourage, notamment l'élément d'assemblage, sont de préférence en matière sensiblement identique (et de même rigidité).

L'élément d'assemblage peut être fixé au vitrage (de manière permanente), notamment par collage, et/ou est entouré par une encapsulation polymérique (surmoulée, notamment souple, de type PU ou TP) sur au moins une zone en périphérie du vitrage et comprend alors des moyens d'ancrages mécanique dans l'encapsulation, de type ailettes avec des orifices (empêche mouvement même si adhésion pas parfaite, ancrage utile notamment pour le positionnement correct des diodes).

L'élément d'assemblage (partie de liaison etc) peut être de préférence
- en (thermo)plastique rigide ;
- polycarbonate (PC), polyméthacrylate de méthyle (PMMA), polyéthylène (PE), polypropylène (PP), polyamide (PA66), acrylonitrile butadiène styrène (ABS), et leurs alliages ABS-PC, polystyréne (PS), acrylonitrile styrène acrylate ASA, à base de polymère de formaldéhyde (polyoxymethylene POM), de terphényle polybromé (PBT), de préférence chargé en fibres de verre pour encore plus de résistance, notamment le PA66 GF30 (30% de fibres de verre) ;
- en métal (acier, aluminium...).

L'élément d'assemblage est éventuellement entouré voire en contact ou même solidaire d'un ou de plusieurs éléments fonctionnels qui assurent la fonction esthétique notamment ou aide à la souplesse des contacts avec le capot) et qui sont trop souples pour assurer le maintien du capot
- par exemple les thermoplastiques souples :
   - en polyuréthane, notamment en PU-RIM (Reaction In Mold en anglais)
   - thermoplastique élastomère (TPE), notamment composés à base de styrène éthylène butadiène styrène SEBS/ polypropylène (PP), thermoplastique TPU, polypropylène PP/EPDM,
   - polyvinyle chlore (PVC), terpolymère éthylène-propylène-diène (EPDM),

L'élément d'assemblage (la partie de liaison, partie de guidage etc) peut être collé sur le vitrage par un tape/adhésif double face (acrylique...) de préférence, ou éventuellement par colle PU bi ou mono composant. Le collage aussi sur une partie souple solidaire notamment qui entoure la partie de liaison.

Le vitrage, et de préférence l'élément d'assemblage, comprend une feuille métallique (feuille prémontée sur pièce plastique ou pièce métallique), formant un anti lumière parasite, agencé (parallèlement) le long de la première face principale au delà de la face ou zone émettrice et dépassant éventuellement de la tranche d'injection (notamment en cas d'encapsulation polymérique flush).

L'élément d'assemblage peut être un élément fonctionnel qui est l'âme métallique d'un joint prémonté et évidé localement, éventuellement recouverte d'une matière polymérique (en dehors des zones de positionnement et/ou de maintien en position).

Le vitrage comporte une pluralité d'éléments d'assemblage sous forme de pièces monolithiques alignées et emboitées les unes aux autres par des moyens de fixation provisoires (avec mise en position latérale d'un élément d'assemblage par rapport à l'autre).

L'élément d'assemblage peut former de préférence une pièce évidée monoface à contour fermé tel qu'un cadre.

L'élément d'assemblage peut être sur une zone ou sur toute la longueur d'une bande (un côté du vitrage), il peut être sur 2 bandes adjacentes ou opposées, ou sur toute la périphérie.

Comme déjà évoqué, un élément fonctionnel périphérique peut être lié à la première feuille. L'élément fonctionnel peut être un encapsulât, un extrudât, un joint prémonté (lécheur), une pièce moulée, injectée....

L'élément fonctionnel est directement sur la première feuille ou indirectement par exemple via un élément, de renfort, d'adhésion.

L'élément fonctionnel peut être ainsi lié au vitrage par tout moyen :
- adhésion directe de la matière (moulée...),
- pincement ou chaussement,
- moyen de liaison de type collage, etc.

L'élément fonctionnel peut être monoface, biface, voire triface.

Comme déjà vu le vitrage multiple lumineux de porte de meuble notamment (réfrigéré) peut notamment comporter un élément fonctionnel surmoulé, polymérique, et de préférence entre l'encapsulation et le vitrage, notamment en verre minéral, une couche de primaire, mono, bi ou tri-composants, par exemple à base de polyuréthane, polyester, polyvinyle acétate, isocyanate.

L'élément fonctionnel peut être une encapsulation polymérique, notamment épaisse de 0,5 mm à plusieurs cm, obtenue par surmoulage.

Dans les applications de porte de meuble notamment (réfrigéré), la matière d'encapsulation est généralement noire ou colorée (pour des fins esthétiques et/ou de masquage). L'encapsulation peut être en polyuréthane, notamment en PU-RIM (Reaction In Mold en anglais). D'autres matières de surmoulage sont :
- les thermoplastiques souples :
   - thermoplastique élastomère (TPE), notamment composés à base de styrène éthylène butadiène styrène SEBS/ polypropylène (PP), thermoplastique TPU, polypropylène PP/EPDM,
   - polyvinyle chlore (PVC), terpolymère éthylène-propylène-diène (EPDM),
- thermoplastiques rigides :
   - polycarbonate (PC), polyméthacrylate de méthyle (PMMA), polyéthylène (PE), polypropylène (PP), polyamide (PA66), acrylonitrile butadiène styrène (ABS), et leurs alliages ABS-PC, polystyréne (PS), acrylonitrile styrène acrylate ASA.

La matière de surmoulage peut être colorée, chargée des fibres de verre.

La couche de primaire, mono, bi ou tri-composants, est par exemple à base de polyuréthane, polyester, polyvinyle acétate, isocyanate ..., par exemple épaisse de 5 à 50 µm, entre l'encapsulation et le vitrage en particulier en verre minéral, car cette couche favorise l'adhésion à un verre minéral.

L'élément fonctionnel (surmoulé) apporte également une bonne finition esthétique et permet d'intégrer d'autres éléments ou fonctions :
- surmoulage de cadres,
- inserts de renforcement ou inserts de fixation du vitrage, notamment pour les vitrages ouvrants,
- profil d'étanchéité à lèvres multiples (double, triple ...), s'écrasant après montage.

L'élément fonctionnel surmoulé peut être de toute forme, avec ou sans lèvre.

De préférence on réalise un entourage flush, c'est-à-dire affleurant à une des faces du vitrage.

Le vitrage multiple lumineux de porte de meuble notamment réfrigéré peut comprendre un élément fonctionnel qui est notamment
- un surmoulage ou une pièce (joint, cadre) collée,
- un insert de fixation du vitrage,
- l'âme métallique d'un joint prémonté et évidé localement, éventuellement recouverte d'une matière polymérique (souple etc), (en dehors des zones de positionnement et/ou de maintien en position.

L'élément fonctionnel peut être un joint polymérique, de préférence en élastomère, notamment en TPE (pour thermoplastique élastomère), ou EPDM, épais de quelques mm (typiquement entre 2 et 15 mm).

Le joint peut être adhésivé pour son maintien. Le joint peut tenir simplement par pincement ou par chaussage ou par clipsage (2 demi-cadres par exemple). Le joint peut être monoface, biface, triface. Le joint peut former un cadre. Le joint peut être de toute forme : en L, en U... Le joint peut être démontable à tout moment. Il peut comporter par une ou plusieurs de lèvres mises en contrainte après fixation.

L'élément fonctionnel peut être métallique ou polymérique, polypropylène (PP), polyamide (PA66), polybutylène téréphtalate (PBT) ... chargé ou non de fibres de verre.

L'élément fonctionnel conserve une ou des fonctionnalités standards pour le vitrage de porte de meuble notamment réfrigéré.

La fonctionnalité (simple ou multiple) de l'élément fonctionnel peut être l'une ou les suivantes :
- cadre du vitrage (monoface, biface, triface comme déjà vu), notamment de largeur sur la première face de 3 à 100 mm, de 10 à 40 mm d'épaisseur,
- pièce d'étanchéité au(x) fluide(s) (eau liquide, vapeur, produits de nettoyage...)
- pièce opaque et/ou de masquage,
- et/ou
- pièce (ponctuelle) de maintien d'éléments mécaniques.

De préférence la distance entre la face interne du capot et la première face est inférieure à 10 mm.

De préférence, la distance entre la face externe du capot et la tranche d'injection est inférieure à 15 mm. L'épaisseur du capot peut être inférieure à 5 mm.

Par ailleurs, l'espace des rayonnements émis avant injection, dit espace de couplage, varie naturellement en fonction du diagramme de rayonnement de la source, défini par une direction principale d'émission et un cône d'émission.

On peut prévoir une matière de remplissage de l'espace de couplage transparente au(x)dit(s) rayonnement(s) adhésive ou non, notamment :
- une mousse, une résine thermoplastique,
- une matière adhésive, de type colle, noyant les puces et fixant les puces au vitrage,
- un adhésif double face, collé sur les puces et le support par une face adhésive et collé au vitrage par l'autre face adhésive.

Comme matières adhésives (polymères etc) remplissant si nécessaire une fonction d'étanchéité à court terme, on peut citer :
- colle réticulable aux UV,
- une bande (acrylique, PU...) adhésivée avec colle acrylique,
- une colle transparente, PU, silicone, acrylique,
- une résine thermoplastique : polyvinyl butyral (PVB), copolymère éthylène/acétate de vinyle (EVA) ...

Toutefois l'invention permet d'éviter l'ajout d'un élément supplémentaire tel que précité (matière de remplissage et/ou adhésive et/ou matière étanchéité) pour réaliser le couplage optique entre les DEL (nues ou pré-encapsulées) et le vitrage. De tels éléments engendrent un surcoût et sont susceptibles de modifier la couleur de la lumière.

Ainsi, de manière avantageuse, l'espace des rayonnements émis avant injection, dit espace de couplage est gazeux (un ou plusieurs gaz, par exemple de l'air). L'espace de couplage est notamment exempt de toute paroi (capot , élément d'assemblage etc) entre les diodes et la tranche.

Les diodes peuvent être (pré) encapsulées, c'est-à-dire comprenant une puce semi-conductrice et une enveloppe, par exemple en résine type époxy ou en PMMA, encapsulant la puce et dont les fonctions sont multiples : élément diffusant ou de focalisation, conversion de longueur d'onde. L'enveloppe est commune ou individuelle.

Les diodes peuvent être de préférence simples puces semi-conductrices par exemple de taille de l'ordre de la centaine de µm ou du mm.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

La diode peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support,
- une diode dont la direction principale d'émission est perpendiculaire ou oblique par rapport la face émettrice de la puce.

Le profilé support de source quant à lui peut être en périphérie de bord(s) du vitrage : sur la tranche de la première feuille et/ou sur la face inférieure de la première feuille et/ou sur la face supérieure de la première feuille).

Le profilé support de source peut être de longueur (et/ou respectivement largeur) inférieure à la longueur (respectivement largeur) du bord de couplage de la première feuille.

Le profilé support de diodes peut être un PCB classique ou être métallique

Le profilé support de diodes peut avoir une section rectangulaire.

Le nombre total de diodes, la puissance des diodes sont choisies par la taille et la localisation des zones à éclairer, par l'intensité lumineuse souhaitée et l'homogénéité de lumière requise.

La longueur du profilé support de diodes varie en fonction du nombre de diodes et de l'étendue de la surface à éclairer.

Le profilé support de diodes a une longueur par exemple de l'ordre de 20 cm. On multiplie de préférence le nombre de barrettes de DEL (profilé + DEL) pour couvrir la surface.

Pour davantage de compacité et/ou une conception simplifiée, le profilé support de diodes peut présenter en outre l'une ou les caractéristiques suivantes :
- être mince, notamment d'épaisseur inférieure ou égale à 1 mm, voire à 0,1,
- avoir un revêtement de surface métallique pour une conduction électrique.

On peut prévoir plusieurs profilés supports à diodes identiques ou similaires au lieu d'un seul profilé support notamment si les zones à éclairer sont très distantes entre elles ou pour éclairer une large zone.

On peut prévoir un profilé support de diodes avec une taille de référence donnée multiplié en fonction de la taille du vitrage et des besoins.

Pour davantage de compacité et/ou pour augmenter la zone de clair de vitre, la distance entre la partie porteuse des puces et la première feuille est de préférence inférieure ou égale à 5 mm.

Le support de diodes peut également être en plusieurs parties, dont une peut avoir une fonction de support du circuit électrique et l'autre la fonction de radiateur pour dissiper la chaleur. L'espace dans le logement peut être exploité pour loger ce radiateur et lui donner une forme avantageuse.

La source est espacée de la tranche d'injection (par de l'air), n'est pas fixée à la tranche d'injection, et même le support de diodes n'est pas fixé sur le vitrage mais au capot pour simplifier et accélérer le démontage.

Dans une feuille organique, notamment en plastique, on peut en effet pratiquer plus facilement une ou des rainures et/ou un évidement périphérique que dans une feuille en verre (minérale), notamment trempée.

Dans un mode de réalisation préféré, le trou est sur tout le pourtour de la deuxième face et le capot forme un cadre notamment intégrant lesdits moyens de fixation (par vissage ou clipsage etc).

De préférence, le facteur de transmission de la première feuille autour du pic du rayonnement des puces (perpendiculairement aux faces principales) est supérieur ou égal à 50%, encore plus préférentiellement supérieur ou égal à 70%, et même supérieur ou égal à 80%.

Le vitrage peut avoir une couche dite protectrice (une feuille, un film, un dépôt...) sur l'une des première ou deuxième faces ou s'étendant sur ladite face. Cette couche peut avoir une fonction double :
- diffusion de lumière (par exemple film souple en PU, PE, silicone éventuellement collé par acrylique),
- protection aux rayonnements (IR, UV) : contrôle solaire, basse émissivité...,
- anti rayures,
- esthétique (teintée, avec motifs etc).

On peut prévoir de préférence pour le ou les bords de couplage de la première feuille des bords arrondis. En particulier dans le cas où l'espace des rayonnements émis est de l'air, il est possible de tirer parti de la réfraction au niveau de l'interface air/première feuille de géométrie appropriée (bord arrondi, voire même biseauté...) permettant ainsi de focaliser les rayons dans la première feuille.

Le verre peut avoir éventuellement préalablement subi un traitement thermique du type durcissement, recuit, trempe, bombage.

Dans la présente description, en l'absence de précision, on entend par verre, un verre minéral.

On peut découper le bord de la première feuille (détourage avec évidements avant trempage) d'un vitrage multiple pour y loger les diodes.

Les premières et/ou deuxième feuilles peuvent être de toute forme (rectangulaire, carré, rond, ovale,...), et être planes ou galbées.

La première feuille peut être préférentiellement en verre sodocalcique, par exemple en verre PLANILUX de la société SAINT GOBAIN GLASS.

La deuxième feuille peut être colorée par exemple en verre VENUS de la société SAINT GOBAIN GLASS.

Les moyens d'extraction de la lumière guidée via la première et/ou la deuxième face principale, sont des moyens de diffusion en surface de la première et/ou de la deuxième face principale ou des moyens de diffusion en volume dans la première feuille, et/ou lorsque la lumière injectée est UV, des moyens de conversion de la lumière UV en lumière visible via la première et/ou la deuxième face principale, qui sont des luminophores notamment sur la première et/ou de la deuxième face principale.

Pour l'extraction de la lumière on emploie des moyens de diffusion, formés soit par un traitement superficiel de la feuille de verre du type sablage, attaque acide, dépôt d'émail ou de pâte diffusante, soit par un traitement dans la masse du verre de type gravure laser.

La couche diffusante peut être composée d'éléments contenant des particules et un liant, le liant permettant d'agglomérer entre elles les particules. Les particules peuvent être métalliques ou des oxydes métalliques, la taille des particules peut être comprise entre 50 nm et 1 µm, de préférence le liant peut être minéral pour une résistance à la chaleur.

Dans un mode de réalisation préféré, la couche diffusante est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante d'environ 10 µm.

Pour davantage de compacité et/ou pour réduire ou augmenter la zone de clair de vitre, la distance de la face émettrice et de la première feuille peut être inférieure à 2 mm. Notamment, on peut utiliser des diodes d'encombrement réduit par exemple des puces sans lentille et/ou sans préencapsulation notamment de largeur de l'ordre de 1 mm, de longueur de l'ordre de 2,8 mm, de hauteur de l'ordre de 1,5 mm.

La ou les zones lumineuses, (notamment périphérique le long d'un bord du vitrage ou de bords opposés ou adjacents, en bande(s), encadrant le vitrage), on forme un éclairage interne d'ambiance, un éclairage interne de lecture par vitre latérale, toit ...), un affichage lumineux de signalisation interne et/ou externe.

La ou les zones lumineuses, notamment sont périphériques, en bande(s) encadrant le vitrage.

La lumière peut être :
- continue et/ou par intermittence,
- monochromatique et/ou plurichromatique.

Comme motifs décoratifs, on peut former par exemple une ou des bandes lumineuses, un cadre lumineux périphérique.

On peut réaliser une seule face d'extraction.

L'invention vise enfin un procédé de fabrication du vitrage multiple lumineux de porte de meuble notamment réfrigéré.

On propose une solution de montage post encapsulation de la source notamment des diodes avec les avantages déjà énoncés précédemment (limitation du rebut, source plus facilement accessible et/ou ajoutée ...).

Selon le design l'élément d'assemblage tient tout seul sur le vitrage, et le moule vient appuyer dessus avec des pions lors du surmoulage, ou alors on peut aussi utiliser de la colle de type hotmelt (PU ou PA).

L'invention vise un procédé de fabrication du vitrage multiple lumineux de porte de meuble notamment (réfrigéré), comprenant les étapes suivantes :
- la fourniture du vitrage multiple suivi du placement et de la fixation par collage de l'élément d'assemblage sur la première feuille et/ou la deuxième feuille,
- l'assemblage du capot avec le support de source puis du capot sur l'élément d'assemblage, de préférence par rotation puis fixation réversible, ou l'assemblage du support de diodes/sources lumineuses sur l'élément d'assemblage puis l'assemblage du capot sur l'élément d'assemblage et sur le support, de préférence par rotation puis fixation réversible.
ou dans une autre réalisation, il comprend les étapes suivantes :
- la fourniture du vitrage multiple, suivie du placement dans un moule,
- le placement dans le moule de l'élément d'assemblage sur la première feuille et/ou la deuxième feuille (par ex dépassante) avec un couvercle contenant un joint
- la fermeture du moule sur le couvercle, la compression du joint, le surmoulage par injection d'une matière d'encapsulation polymérique (souple), notamment en polyuréthane ou thermoplastique,
- le retrait du vitrage du moule et le retrait du joint de la zone en regard de la tranche d'injection laissant le logement pour la source
- l'assemblage du capot avec le support de source puis du capot sur l'élément d'assemblage, de préférence par rotation puis fixation réversible, ou l'assemblage du support de source sur l'élément d'assemblage puis l'assemblage du capot sur l'élément d'assemblage et sur le support de préférence par rotation puis fixation réversible.

Ces procédés de fabrication selon l'invention sont compatibles avec les procédés industriels de vitrage de porte de meuble notamment (réfrigéré).

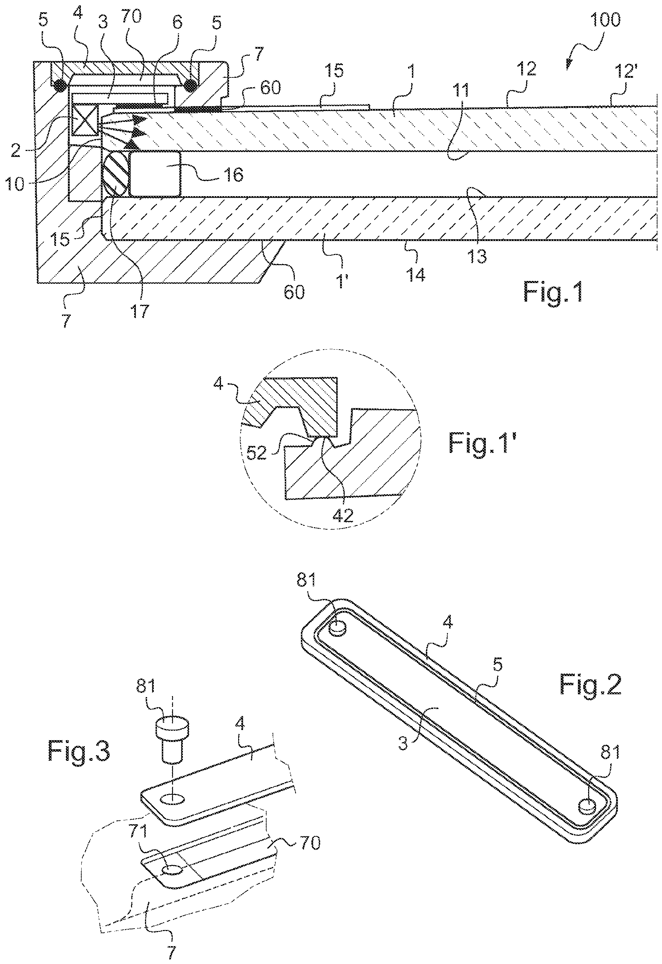

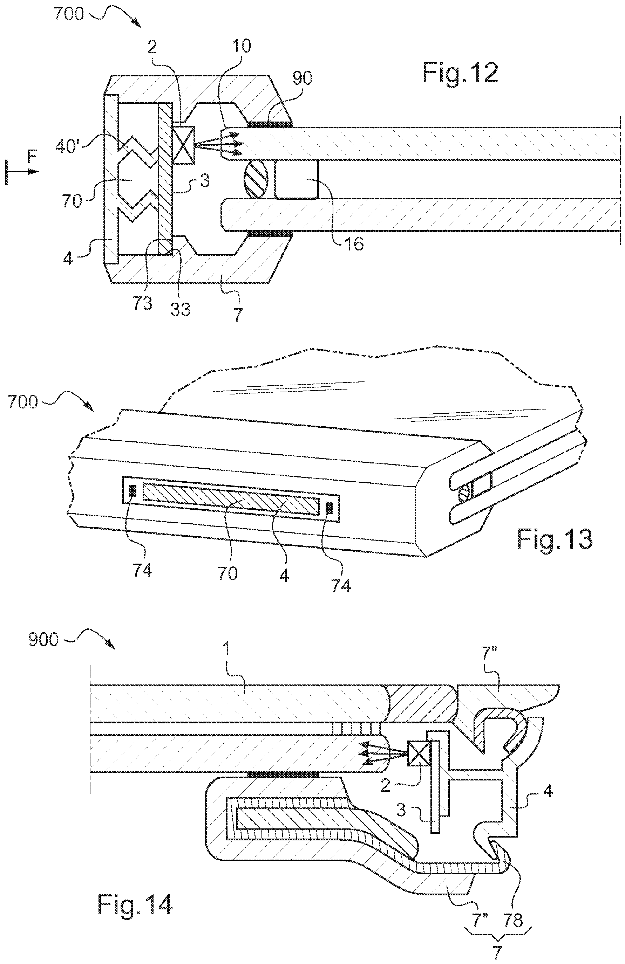

D'autres détails et caractéristiques avantageuses de l'invention apparaissent à la lecture des exemples de vitrages selon l'invention illustrés par les figures suivantes :
▪ Les figures 1, 7 à 11 représentent des vues schématiques partielles de coupe transversale des vitrages lumineux de porte de meuble notamment (réfrigéré) dans différents modes de réalisation de l'invention,
▪ les figures 1', 2, 3, 4, 5, 6, représentent des vues schématiques du capot,
▪ Les figures 12, 13 et 14 représentent des exemples de vitrages lumineux qui ne font pas partie de l'invention. La figure 13 montre une vue latérale du vitrage de la figure 12.

On précise que pour un souci de clarté les différents éléments des objets représentés ne sont pas nécessairement reproduits à l'échelle.

La figure 1 représente une vue schématique partielle de coupe d'un vitrage multiple lumineux de porte de meuble notamment (réfrigéré) 100 dans un premier mode de réalisation de l'invention. Les couches fonctionnelles usuelles (antigivre, anti buée...) ne sont pas reproduites ici.

Ce vitrage éclairant 100 comprend un vitrage multiple comportant :
- une première feuille transparente 1, par exemple rectangulaire, présentant une première face principale 11 et une deuxième face principale 12, et une tranche 10, par exemple une feuille de verre silicosodocalcique, d'épaisseur égale à 2,1 mm,
- une deuxième feuille de verre 1', avec un joint 17 et un espaceur périphérique 16, formant un vitrage isolant voire sous vide (avec d'autres espaceurs éventuels).

Usuellement, un intercalaire est fixé à l'intérieur du vitrage par ses faces latérales aux faces internes des feuilles de verre par du caoutchouc butyl qui a également pour rôle de rendre étanche l'intérieur du vitrage à la vapeur d'eau. L'intercalaire est disposé en retrait à l'intérieur du vitrage et à proximité des tranches desdites feuilles de verre, de façon à ménager une gorge périphérique dans laquelle sont injectés les moyens d'étanchéité du type mastic, tel qu'en polysulfure ou polyuréthane. Le mastic confirme l'assemblage mécanique des deux feuilles de verre et assure une étanchéité à l'eau liquide ou aux solvants.

Un profilé 3 support de diodes électroluminescentes 2 s'étend en bordure par exemple longitudinale de la première feuille et est fixé en périphérie de la deuxième face 12 de la première feuille de verre 1 par un scratch de préférence (pour son retrait).

Le profilé support 3 est monolithique, mince, d'épaisseur égale à 0,6 mm (5 mm max de préférence), large de 7 mm, long de 20 cm. Il peut être de section rectangulaire, métallique ou un PCB classique.

Les diodes électroluminescentes comportant chacune une puce émettrice 2 apte à émettre un ou plusieurs rayonnements dans le visible guidé(s) dans la première feuille 1. Les diodes sont de petites tailles typiquement quelques mm ou moins, notamment de l'ordre de 2x2x1 mm, avec ou sans optique (lentille) non pré-encapsulées pour réduire au maximum l'encombrement ou encapsulée (par du silicone) pour sa protection

Dans la configuration illustrée, la face émettrice de la puce est latérale (parallèle au profilé 3). On réduit au maximum la distance entre la face émettrice et la tranche d'injection, par exemple de 5 mm, voire de 0,2 à 2 mm. La direction principale d'émission est perpendiculaire à la face de la puce semi-conductrice, par exemple avec une couche active à multi puits quantique, de technologie AlInGaP ou autres semi-conducteurs. Le cône de lumière est un cône de type lambertien, de +/-60°.

L'extraction de la lumière 12' peut se faire via la deuxième face 12 qui est par exemple - la face intérieure au meuble.

En variante on choisit des LED UV, notamment dans l'UVA, pour exciter des luminophores sur la face 12 par exemple.

L'extraction 12' est réalisée par tout moyen de diffusion à la surface de la deuxième face 12: sablage, attaque acide, couche diffusante, sérigraphie... ou en variante par gravure laser dans la première feuille 1.

Pour un groupe de diodes donné, on définit un espace des rayonnements émis entre chaque face émettrice (puce) et la tranche de la première feuille, dit espace de couplage optique, de préférence qui est un milieu gazeux, typiquement de l'air, dépourvu de colle.

Chaque puce et l'espace des rayonnements émis doivent être protégés de toute pollution : eau, chimique etc, ceci à long terme comme pendant la fabrication du vitrage 100.

Il est usuel de pourvoir le vitrage d'un joint prémonté 7, en plastique rigide, en bordure du vitrage, et de préférence sur tout le pourtour du vitrage (ici feuilleté) et d'au moins la face 12. Le joint 7 est collé par une colle 60 ou un adhésif double face.

Pour une encapsulation de type Flush, on préfère laisser la face 14 du deuxième verre 1' libre.

Le joint 7 présente selon l'invention un évidement 70 par exemple rectangulaire logeant la barrette de diodes (les diodes 2 sur le profilé support 3).

Le joint 7 participe à la protection des diodes, donc à l'étanchéité à long terme au(x) fluide(s) (eau liquide, produit de nettoyage, voire eau vapeur...) tout en gardant ses fonctionnalités d'origine.

Le vitrage comporte en outre un capot 4 de couverture de la barrette de diodes, le long d'une bordure de la deuxième face 12, et dépassant de la tranche 10 d'injection; capot avec une face générale dite interne orientée vers la première feuille.

Le capot 4 est une pièce plastique rigide avec une base longitudinale de forme générale plane, de contour rectangulaire (avec des bords éventuellement arrondis). Le capot est dit facial car la base est en regard (et parallèle) des faces principales du vitrage feuilleté.

Le capot 4 est facilement démontable pour insérer des diodes ou les changer.

Le design du capot et de l'élément d'assemblage permet ainsi l'intégration de la barrette de diodes et permet également la focalisation de la barrette c'est-à-dire le bon positionnement de la barrette par rapport à la tranche d'injection.

En outre le capot est éventuellement pourvu d'un évidement borgne ou traversant (de préférence rendu étanche par mousse ou joint d'étanchéité ...) pour le passage de la connectique.

Un élément interfacial 5 pour l'étanchéité interfaciale au(x) fluide(s), est un joint d'étanchéité, en EPDM, en forme de cordon large de 5 mm est dans une rainure sur la face interne du capot.

L'élément d'étanchéité interfaciale 5 est une matière comprimée, l'étanchéité par compression de la matière étant réalisée par un effort de fermeture des moyens de fixation du capot provisoires.

En variante montré en figure 1', le joint présente un profil d'étanchéité 52 comprimé par une zone plane 42 du capot.

On peut choisir des diodes émettant en lumière blanche ou colorée pour un éclairage d'ambiance, de lecture ...

On peut bien sûr prévoir plusieurs barrettes sur des bords distincts, et/ou avec des fonctions distinctes (choix adapté de la puissance, de la lumière émise, de la position et de l'étendue des zones extraction).

Le vitrage 100 peut former une porte de meuble notamment (réfrigéré), porte de mobilier ou couvercle de bac.

Comme illustré en figures 2 et 3 ; le capot 4 est solidaire du joint prémonté 7, par des moyens de fixation réversibles par exemple deux vis 81, traversant le capot et dépassant de la face interne.

Ces vis sont reçues dans contres dépouilles locales de l'élément fonctionnel (7), à savoir des trous filetés 71 et de préférence entre le cordon de joint 5 et le bord de l'évidement.

L'élément d'étanchéité interfaciale 5 est une matière comprimée, l'étanchéité par compression de la matière étant réalisée par un effort de fermeture desdits moyens de fixation du capot 81.

Le capot 4 est ainsi facilement démontable pour insérer des diodes ou les changer.

En première variante de capot, les moyens de fixation du capot sont deux moyens de clipsage reçus dans deux contres dépouilles locales de l'élément fonctionnel de préférence entre le cordon de joint et le bord de l'évidement.

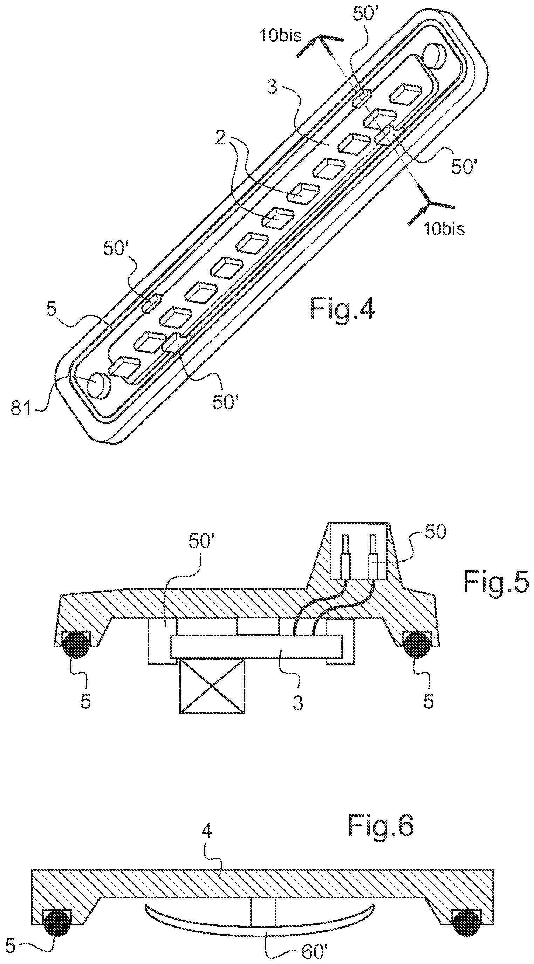

Dans une deuxième variante de capot (alternative ou cumulative de la première) présentée en figure 4 et 5, le profilé support 3 de diodes 2 est tenu par le capot 4 par exemple par des crochets 50'.

Le design du capot permet ainsi l'intégration de la barrette de diodes et permet également la focalisation de la barrette c'est-à-dire le bon positionnement de la barrette par rapport à la tranche d'injection 10.

Le capot peut comporter en outre des surfaces ou butées pour la référence dans le logement du joint 7.

En outre le capot est pourvu d'un évidement 50 borgne ou traversant (rendu étanche par mousse ou joint d'étanchéité ...) pour le passage de la connectique.

Dans une troisième variante de capot (alternative à la deuxième variante) présentée en figure 6, la face interne est pourvue d'un moyen de positionnement précis, donc d'alignement, 60' du profilé 3 support des diodes, sous forme d'un poussoir 60' (forme concave vers l'opposé de la feuille 1) appuyant sur la face externe du profilé 3, ou étant un ressort en variante.

Le design du capot 4 comporte donc un élément 60' permettant d'exercer un effort sur la barrette de diodes préalablement fixée à la feuille.

On peut choisir des diodes émettant en lumière blanche ou colorée pour un éclairage d'ambiance, de lecture ...

On peut bien sûr prévoir plusieurs barrettes sur des bords distincts, et/ou avec des fonctions distinctes (choix adapté de la puissance, de la lumière émise, de la position et de l'étendue des zones extraction).

La figure 7 représente une vue schématique partielle de coupe transversale d'un vitrage multiple lumineux de porte de meuble notamment (réfrigéré) 200 dans un autre mode de réalisation de l'invention.

Le vitrage 200 diffère du vitrage 100 par
- le remplacement du joint d'étanchéité par le vernis de tropicalisation 5' sur le PCB 3 (sauf sur les faces émettrices),
- la suppression du scratch, le support étant fixé au capot par liaison serrée 40.

La figure 8 représente une vue schématique partielle de coupe transversale d'un vitrage multiple lumineux de porte de meuble notamment (réfrigéré) 300 dans un autre mode de réalisation de l'invention.

Le vitrage 300 diffère du vitrage 200 par :
- le remplacement du joint d'étanchéité par une étanchéité d'encapsulation 5' (hors des faces émettrices),
- la suppression du scratch, le support étant fixé au capot par colle,
- le maintien de type double clipsage (clips locaux le long du capot) du capot 72 dans le joint prémonté 71.

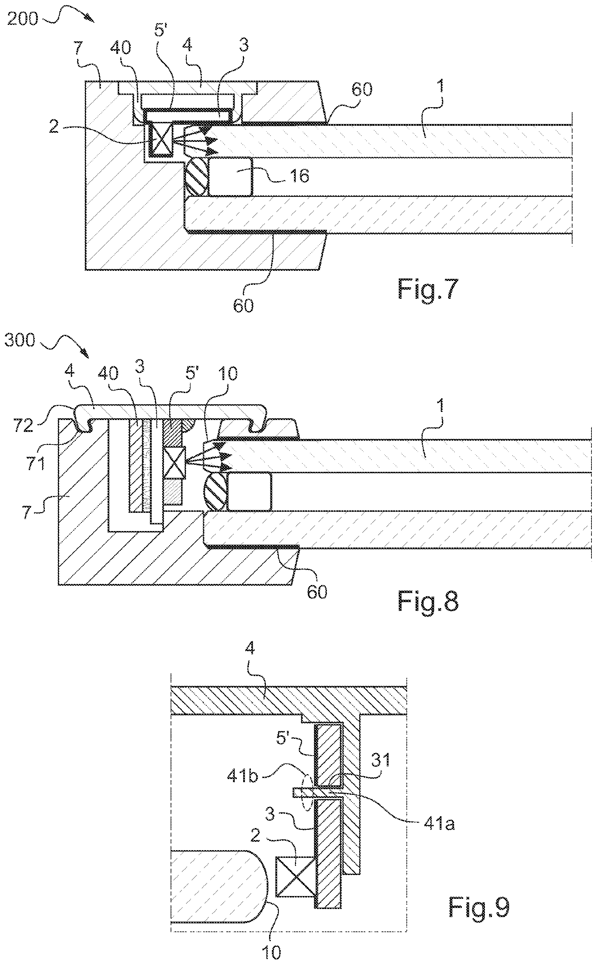

La figure 9 montre en vue de détail une autre configuration de montage du support de diodes 3 sur le capot 4. Le support de diodes est pourvu d'orifices 31 pour placement avec des pions du capot 41a et des bouterolles 41b.

Le support de diodes (hors diodes) est pourvu d'un vernis de tropicalisation 5'.

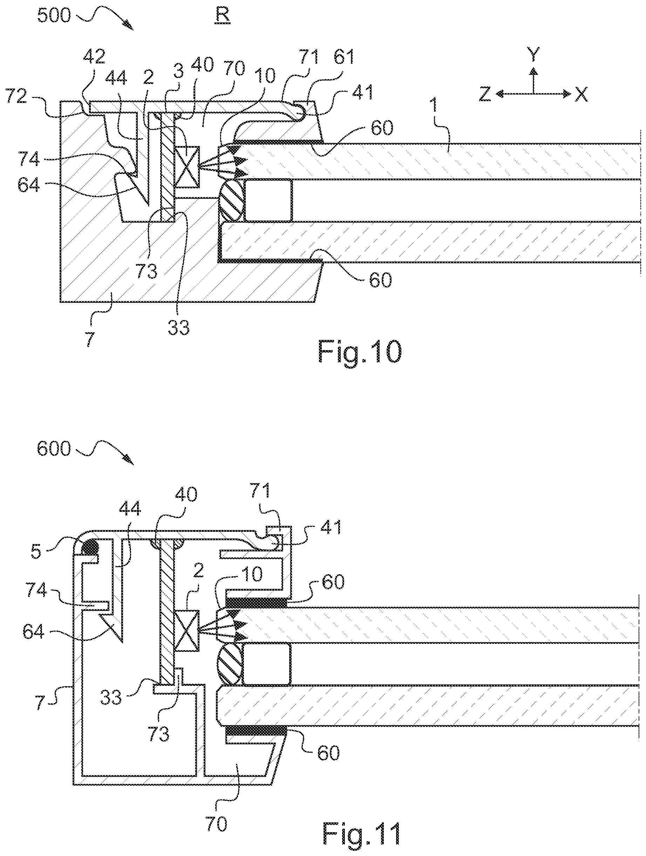

La figure 10 représente une vue schématique partielle de coupe transversale d'un vitrage multiple lumineux de porte de meuble notamment réfrigéré 500 dans un autre mode de réalisation de l'invention.

Le vitrage 500 diffère du vitrage 300 en ce qu'il est prévu en outre un système d'assemblage du support de diodes par rotation - fixation réversible comportant ledit capot 4 avec une première extrémité latérale et d'autres parties, la première extrémité latérale (à droite sur la figure) prend un forme sphérique 41 en appui (lors du montage) sur une première partie du joint prémonté 7 de forme complémentaire dite partie de guidage 61.

La première extrémité latérale 41 étant montée mobile en rotation R par rapport au vitrage autour d'un axe de rotation parallèle à la tranche d'injection, la première extrémité latérale comprenant une pluralité de sphères (locales) le long du capot venant en butée (plane) contre le joint prémonté 7 en forme de C dans des zones locales 71.

A l'opposé de la base, l'extrémité latérale 42 (à gauche sur la figure) est en butée 72 contre le joint7.

Une partie 44 du capot normale à la face interne (suivant la direction Y et orienté vers le verre) porte des moyens de maintien en position du capot sous forme d'ergots 64 de clipsage, le long du capot, décalés par rapport aux zones d'appui pour la rotation, clippage sur des butées anti retour dans la paroi verticale 74 du joint prémonté 7.

Les zones de clipsage ou de rotation sont indifféremment des zones avec ou sans support de diodes 3. Le support de diodes s'étend longitudinalement sur l'essentiel de la longueur du capot (en regard de l'évidement). Le support de diodes peut s'étendre longitudinalement sur la (quasi) totalité de l'évidement 70.

Le joint 7 forme des butées de positionnement 73 en X et en Y pour le support 3.

La figure 11 représente une vue schématique partielle de coupe transversale d'un vitrage multiple lumineux de porte de meuble notamment réfrigéré 600 dans un autre mode de réalisation de l'invention.

Seules les différences sont décrites par rapport au vitrage 500. Ici le joint 7 est coextrudé et comprime un éventuel élément d'étanchéité interfaciale de type cordon 5.

La figure 12 représente une vue schématique partielle de coupe transversale d'un vitrage multiple lumineux de porte de meuble notamment réfrigéré 700 dans un autre mode de réalisation ne faisant pas partie de l'invention.

Le vitrage 700 diffère du vitrage 600 par le capot latéral 4 (en regard de la tranche d'injection 10). Le joint prémonté 7 a des butées en X et Y 73 pour la tranche 33 du support 3 de diodes. Des ressorts latéraux 40' intégrés au capot 4 sont en appui souple sur l'arrière du support 3.

Comme montré en figure 13 on prépositionne le support dans l'évidement 70 et on fixe (le capot 4 sur le joint 7) par des clips latéraux 74 à l'évidement 70.

Le capot en variante peut être positionné par rapport à la tranche d'injection du verre à l'aide d'un ou de plusieurs éléments saillants en direction de la tranche d'injection et venant en butée contre la tranche d'injection dans des zones sans diodes (ni sans support éventuellement).

La figure 14 représente une vue schématique partielle de coupe transversale d'un vitrage multiple lumineux de porte de meuble notamment réfrigéré 700 dans un autre mode de réalisation ne faisant pas partie l'invention.

Le vitrage 900 est monté par rotation fixation provisoire comme le vitrage 500 mais ici le capot 4 est latéral. Le joint prémonté 7 est collé sur le vitrage et comprend une âme métallique 78 entouré localement (hors zones de clipsage et de rotation) par une matière polymérique 7".

## Revendications

1. Vitrage multiple lumineux de porte de meuble notamment réfrigéré comportant :
- une première feuille en verre minéral ou organique (1) présentant une première face principale (11) et une deuxième face principale (12) et une tranche (10),
- une deuxième feuille 1' espacée de la première feuille par des moyens périphériques,
- une source lumineuse périphérique (2) avec un profilé support dit support de source (3), source choisie parmi une fibre optique autosupportée de type cordon avec une partie latérale formant la zone émettrice et parmi des diodes électroluminescentes (2) comportant chacune une puce semi-conductrice avec une face émettrice, le profilé support des diodes (3) étant de type carte à circuit imprimé, la zone ou face émettrice étant en regard de la tranche, dite d'injection (10), de la première feuille pour une propagation de la lumière injectée visible et/ou ultraviolet dit UV dans l'épaisseur de la première feuille, la première feuille (1) jouant alors le rôle de guide de la lumière injectée,
- des moyens d'extraction de la lumière guidée (12') pour former au moins une zone lumineuse,
- le support de source (3) étant dans un logement (70) entouré par de la matière (7) formant un entourage matière incluant un élément d'assemblage (7) qui est une pièce rapportée ou un surmoulage, **caractérisé en ce que** ledit élément d'assemblage est couvert par un capot (4), le capot (4) étant essentiellement facial,
- le capot et le support de source étant démontables du vitrage.

2. Vitrage multiple lumineux de porte de meuble notamment réfrigéré selon la revendication précédente **caractérisé en ce que** des moyens de maintien en position du capot sont réversibles et notamment des moyens de clipsage, des moyens de vissage (81), des moyens de type scratch, des moyens d'aimantation et/ou des moyens de maintien en position du support porté éventuellement par le capot sont réversibles notamment des moyens de clipsage, des moyens de vissage (81), des moyens de type scratch, des moyens d'aimantation.

3. Vitrage multiple lumineux de porte de meuble notamment réfrigéré selon l'une des revendications précédentes **caractérisé en ce que** le capot (4) est associé à un élément interfacial (5), pour l'étanchéité interfaciale au(x) fluide(s) et à la poussière, notamment à l'eau liquide voire vapeur, en périphérie de la face interne du capot ou sur un côté du capot, notamment l'élément d'étanchéité interfaciale au(x) fluide(s) forme un cordon (5).

4. Vitrage multiple lumineux de porte de meuble notamment réfrigéré selon la revendication précédente **caractérisé en ce que** l'élément d'étanchéité interfaciale (5), de préférence en périphérie du capot (4), peut être une matière comprimée, l'étanchéité par compression de la matière étant réalisée par un effort de fermeture de moyens de fixation du capot, notamment l'élément d'étanchéité interfaciale est choisi parmi :
- un joint polymérique par exemple en TPE, en EPDM notamment un joint torique, à lèvre(s) d'étanchéité, le joint étant notamment dans un dégagement ou une rainure du capot, ou une rainure dans l'entourage,
- un profil d'étanchéité sur l'entourage, choisi polymérique, par exemple lèvre(s) d'encapsulât ou de joint prémonté, notamment en EPDM, ou sur la face interne ou un côté du capot polymérique,
- une mousse, notamment mousse acrylique, PU, caoutchouc (EDPM..), thermoplastiques élastomères, en TPE, en polyester, notamment en polyester caoutchouc monocomposant.

5. Vitrage multiple lumineux de porte de meuble notamment réfrigéré selon l'une des revendications précédentes **caractérisé en ce que** le support de diodes (3) au moins est pourvu, avantageusement avant son intégration dans le vitrage, d'au moins une couche de protection contre l'humidité (5') et/ou d'une encapsulation (5') telle qu'un vernis de type silicone, époxy ou acrylique.

6. Vitrage multiple lumineux de porte de meuble notamment réfrigéré selon l'une des revendications précédentes **caractérisé en ce que** des moyens de maintien en position du capot sont distincts de moyens de mise en position du capot et/ou des moyens de maintien en position du support de source sont distincts de moyens de mise en position du support de source (61, 64).

7. Vitrage multiple lumineux de porte de meuble notamment réfrigéré selon l'une des revendications précédentes **caractérisé en ce que** la distance entre la face ou zone émettrice (2) et la tranche d'injection (10) est contrôlée par des moyens de mise en position et des moyens de maintien en position dit de blocage, du support de source (61, 64) à dans les trois directions d'un repère orthogonal (XYZ), lesdits moyens de mise en position et de blocage comportant un système d'assemblage du support de source, lié à la première feuille, incluant l'élément d'assemblage (7) positionné par rapport à la tranche d'injection, le système d'assemblage du support de source incluant de préférence le capot (4).

8. Vitrage multiple lumineux de porte de meuble notamment réfrigéré selon l'une des revendications précédentes **caractérisé en ce que** l'élément d'assemblage (7) :
- est une pièce annulaire monolithique, notamment en plastique suffisamment rigide
- ou est une pièce en plusieurs parties disjointes, notamment en plastique suffisamment rigide
- ou est en une matière avec un évidement local pour loger la source, notamment en plastique suffisamment rigide.

9. Vitrage multiple lumineux de porte de meuble notamment réfrigéré (700) selon l'une des revendications précédentes **caractérisé en ce que** le support de source (3) est positionné dans l'élément d'assemblage (6) par les moyens de mise en position, notamment une ou des butées, et le capot (4) comporte ou coopère avec des éléments (40'), qui en position montée du capot, sont les moyens de maintien en position du support de source dans l'élément d'assemblage, notamment par appui sur le support.

10. Vitrage multiple lumineux de porte de meuble notamment réfrigéré selon l'une des revendications précédentes **caractérisé en ce que** le capot (4) porte le support de source (3), notamment par butées, liaison serré, et les moyens de maintien en position du support de source sont les moyens de maintien en position du capot sur l'élément d'assemblage.

11. Vitrage multiple lumineux de porte de meuble notamment réfrigéré (900) selon l'une des revendications 1 à 8 **caractérisé en ce que** le montage du capot (4), éventuellement porteur du support (3) de source ou porteur de maintien en position du support de source prépositionné, est par rotation et fixation réversible.

12. Vitrage multiple lumineux de porte de meuble notamment réfrigéré selon l'une des revendications précédentes **caractérisé en ce que** le capot (4) et l'entourage, notamment l'élément d'assemblage (7), sont en matière sensiblement identique, en métal ou en plastique.

13. Vitrage multiple lumineux de porte de meuble notamment réfrigéré selon l'une des revendications 1 à 12 **caractérisé en ce que** l'entourage, notamment l'élément d'assemblage (7), est un élément fonctionnel qui est une âme métallique d'un joint prémonté et évidé localement, éventuellement recouverte d'une matière polymérique.

14. Vitrage multiple lumineux de porte de meuble notamment réfrigéré selon l'une des revendications 1 à 13 **caractérisé en ce que** les diodes (2) sont à émission latérale.

15. Porte de meuble réfrigéré incorporant le vitrage multiple lumineux selon l'une des revendications précédentes.

## Patentansprüche

1. Leuchtende Mehrfachverglasung einer Tür eines Möbels, insbesondere eines Kühlmöbels, umfassend:
- eine erste Scheibe aus mineralischem oder organischem Glas (1), die eine erste Hauptseite (11) und eine zweite Hauptseite (12) und eine Kante (10) aufweist,
- eine zweite Scheibe 1', die von der ersten Scheibe durch Umfangsmittel beabstandet ist,
- eine Umfangslichtquelle (2) mit einem Tragprofil, Quellenträger (3) genannt, wobei die Quelle gewählt ist unter einer selbsttragenden Lichtleitfaser von der Art einer Schnur mit einem Seitenteil, das den emittierenden Bereich bildet, und unter Leuchtdioden (2), die jeweils einen Halbleiterchip mit einer emittierenden Seite umfassen, wobei das Diodentragprofil (3) vom Typ Leiterplatte ist, wobei der emittierende Bereich oder die emittierende Seite gegenüber der sogenannten Einkopplungskante (10) der ersten Scheibe liegt zwecks Ausbreitung des einkoppelten sichtbaren und/oder ultravioletten Lichts, UV-Licht genannt, in der Dicke der ersten Scheibe, wobei die ersten Scheibe (1) dann die Funktion eines Leiters des einkoppelten Lichts übernimmt,
- Mittel zum Auskoppeln des geleiteten Lichts (12'), um mindestens einen leuchtenden Bereich zu bilden,
- wobei sich der Quellenträger (3) in einer Aufnahme (70) befindet, die von Material (7) umgeben ist, das eine Materialeinfassung bildet, die ein Montageelement (7) beinhaltet, das ein angesetztes Teil oder eine Anformung ist, **dadurch gekennzeichnet, dass** das Montageelement von einer Blende (4) abdeckt ist, wobei die Blende (4) im Wesentlichen frontseitig ist,
- wobei die Blende und der Quellenträger von der Verglasung demontierbar sind.

2. Leuchtende Mehrfachverglasung einer Tür eines Möbels, insbesondere eines Kühlmöbels, nach vorhergehendem Anspruch, **dadurch gekennzeichnet, dass** Positionshaltemittel der Blende reversibel sind und insbesondere Mittel zum Clipsen, Schraubmittel (81), Klettmittel, Magnetisierungsmittel sind, und/oder Positionshaltemittel des eventuell von der Blende getragenen Trägers reversibel sind, insbesondere Mittel zum Clipsen, Schraubmittel (81), Klettmittel, Magnetisierungsmittel sind.

3. Leuchtende Mehrfachverglasung einer Tür eines Möbels, insbesondere eines Kühlmöbels, nach einem der vorhergehenden Ansprüche, **dadurch gekennzeichnet, dass** die Blende (4) einem Schnittstellenelement (5) zur Schnittstellenabdichtung gegenüber Fluid(en) und Staub, insbesondere flüssigem Wasser oder sogar Dampf, am Umfang der Innenseite der Blende oder an einer Seite der Blende, zugeordnet ist, wobei das Element zur Schnittstellenabdichtung gegenüber Fluid(en) einen Strang (5) bildet.

4. Leuchtende Mehrfachverglasung einer Tür eines Möbels, insbesondere eines Kühlmöbels, nach vorhergehendem Anspruch, **dadurch gekennzeichnet, dass** das Element zur Schnittstellenabdichtung (5), bevorzugt am Umfang der Blende (4), ein komprimiertes Material sein kann, wobei die Dichtheit durch Zusammendrücken des Materials durch eine Schließkraft von Befestigungsmitteln der Blende hergestellt wird, wobei das Element zur Schnittstellenabdichtung ausgewählt ist unter:
- einer Polymerdichtung, beispielsweise aus TPE, aus EPDM, insbesondere einem O-Ring, mit Dichtlippe(n), wobei die Dichtung sich insbesondere in einer Aussparung oder einer Nut der Blende oder einer Nut in der Einfassung befindet,
- einem polymerisch ausgewählten Dichtungsprofil an der Einfassung, beispielsweise Lippe(n) einer Einkapselung oder vormontierten Dichtung, insbesondere aus EPDM, oder auf der Innenseite oder einer Seite der Polymerblende,
- einem Schaum, insbesondere Acrylschaum, PU, Kautschuk (EPDM usw.), thermoplastischen Elastomeren, aus TPE, aus Polyester, insbesondere aus Einkomponenten-Polyesterkautschuk.

5. Leuchtende Mehrfachverglasung einer Tür eines Möbels, insbesondere eines Kühlmöbels, nach einem der vorhergehenden Ansprüche, **dadurch gekennzeichnet, dass** mindestens der Diodenträger (3), vorteilhafterweise vor seinem Einbau in die Verglasung, mit mindestens einer Schicht zum Schutz gegen Feuchtigkeit (5') und/oder mit einer Einkapselung (5') wie einem Silikon-, Epoxidharz- oder Acryllack versehen wird.

6. Leuchtende Mehrfachverglasung einer Tür eines Möbels, insbesondere eines Kühlmöbels, nach einem der vorhergehenden Ansprüche, **dadurch gekennzeichnet, dass** Positionshaltemittel der Blende von Positionierungsmitteln der Blende unterschiedliche sind und/oder Positionshaltemittel des Quellenträgers von Positionierungsmitteln des Quellenträgers (61, 64) unterschiedlich sind.

7. Leuchtende Mehrfachverglasung einer Tür eines Möbels, insbesondere eines Kühlmöbels, nach einem der vorhergehenden Ansprüche, **dadurch gekennzeichnet, dass** der Abstand zwischen der emittierenden Seite oder dem emittierenden Bereich (2) und der Einkopplungskante (10) durch Positionierungsmittel und Positionshaltemittel, sogenannte Blockiermittel, des Quellenträgers (61, 64) in den drei Richtungen eines rechtwinkligen Koordinatensystems (XYZ) kontrolliert wird, wobei die Positionierungs- und Blockiermittel ein mit der ersten Scheibe verbundenes System zur Montage des Quellenträgers umfassen, welches das gegenüber der Einkopplungskante positionierte Montageelement (7) beinhaltet, wobei das Montagesystem des Quellenträgers bevorzugt die Blende (4) beinhaltet.

8. Leuchtende Mehrfachverglasung einer Tür eines Möbels, insbesondere eines Kühlmöbels, nach einem der vorhergehenden Ansprüche, **dadurch gekennzeichnet, dass** das Montageelement (7):
- ein ringförmiges monolithisches Teil ist, insbesondere aus ausreichend starrem Kunststoff,
- oder ein Teil aus mehreren getrennten Teilen ist, insbesondere aus ausreichend starrem Kunststoff,
- oder aus einem Material mit einer lokalen Ausnehmung zur Aufnahme der Quelle ist, insbesondere aus ausreichend starrem Kunststoff.

9. Leuchtende Mehrfachverglasung einer Tür eines Möbels, insbesondere eines Kühlmöbels (700), nach einem der vorhergehenden Ansprüche, **dadurch gekennzeichnet, dass** der Quellenträger (3) in dem Montageelement (6) durch die Positionierungsmittel, insbesondere einen oder mehrere Anschläge, positioniert ist und die Blende (4) Elemente (40') umfasst oder mit diesen zusammenwirkt, die in montierter Position der Blende die Positionshaltemittel des Quellenträgers im Montageelement sind, insbesondere durch Anlage an dem Träger.

10. Leuchtende Mehrfachverglasung einer Tür eines Möbels, insbesondere eines Kühlmöbels, nach einem der vorhergehenden Ansprüche, **dadurch gekennzeichnet, dass** die Blende (4) den Quellenträger (3) trägt, insbesondere durch Anschläge, Pressverbindung, und die Positionshaltemittel des Quellenträgers die Positionshaltemittel der Blende am Montageelement sind.

11. Leuchtende Mehrfachverglasung einer Tür eines Möbels, insbesondere eines Kühlmöbels (900), nach einem der Ansprüche 1 bis 8, **dadurch gekennzeichnet, dass** die Montage der Blende (4), gegebenenfalls den Quellenträger (3) tragend oder die Positionshaltung des vorpositionierten Quellenträgers tragend, durch Drehung und reversible Befestigung erfolgt.

12. Leuchtende Mehrfachverglasung einer Tür eines Möbels, insbesondere eines Kühlmöbels, nach einem der vorhergehenden Ansprüche, **dadurch gekennzeichnet, dass** die Blende (4) und die Einfassung, insbesondere das Montageelement (7) aus im Wesentlichen identischem Material, aus Metall oder aus Kunststoff, bestehen.

13. Leuchtende Mehrfachverglasung einer Tür eines Möbels, insbesondere eines Kühlmöbels nach einem der Ansprüche 1 bis 12, **dadurch gekennzeichnet, dass** die Einfassung, insbesondere das Montageelement (7), ein Funktionselement ist, das ein Metallkern einer vormontierten und lokal ausgesparten Dichtung ist, der gegebenenfalls mit einem Polymermaterial überzogen ist.

14. Leuchtende Mehrfachverglasung einer Tür eines Möbels, insbesondere eines Kühlmöbels, nach einem der Ansprüche 1 bis 13, **dadurch gekennzeichnet, dass** die Dioden (2) seitlich abstrahlen.

15. Kühlmöbeltür mit einer leuchtenden Mehrfachverglasung nach einem der vorhergehenden Ansprüche.

## Claims

1. A luminous multiple glazing unit of a door of furniture notably refrigerated comprising:
- a first sheet of mineral glass or organic glass (1) having a first main face (11) and a second main face (12) and an edge (10),
- a second sheet 1' separated from the first sheet by peripheral means,
- a peripheral light source (2) with a support strip called source support (3), said source being selected from a self-supporting optical fiber of the cord type with a lateral portion forming the emitting zone and from light-emitting diodes (2) each comprising a semiconductor chip with an emitting face, the diode support strip (3) being of the printed circuit board type, the emitting zone or face being opposite the edge, called injection edge (10), of the first sheet for propagation of the visible and/or ultraviolet called UV light injected in the thickness of the first sheet, the first sheet (1) then performing the role of guide of the injected light,
- means for extracting the guided light (12') to form at least one luminous zone,
- the source support (3) being in a housing (70) surrounded by material (7) forming a material framing including an assembly element (7) which is a built-up component or an overmolding, **characterized in that** said assembly element is covered by a cap (4), the cap (4) is essentially facial
- the cap and the source support being removable from the glazing unit.

2. The luminous multiple glazing unit of a door of furniture notably refrigerated as claimed in the preceding claim, **characterized in that** means for holding the cap in position are reversible and notably clipping means, screwing means (81), means of the scratch type, magnetizing means and/or means for holding the support in position optionally carried by the cap are reversible notably clipping means, screwing means (81), means of the scratch type, magnetizing means.

3. The luminous multiple glazing unit of a door of furniture notably refrigerated as claimed in one of the preceding claims, **characterized in that** the cap (4) is associated with an interfacial element (5), for interfacial sealing against fluid(s) and dust, notably liquid water or even water vapor, at the periphery of the internal face of the cap or on one side of the cap, notably the interfacial element for sealing against fluid (s) forms a cord (5) .

4. The luminous multiple glazing unit of a door of furniture notably refrigerated as claimed in the preceding claim, **characterized in that** the interfacial sealing element (5), preferably at the periphery of the cap (4), can be a compressed material, sealing by compression of the material being achieved by a closing force of means for fixing the cap, notably the interfacial sealing element is selected from:
- a polymer seal for example of TPE, of EPDM notably an O-ring seal, with sealing lip(s), the seal notably being in a recess or a groove of the cap, or a groove in the framing,
- a sealing strip on the framing, selected as polymeric, for example lip(s) of encapsulation or of preassembled seal, notably of EPDM, either on the internal face or a side of the polymer cap,
- a foam, notably acrylic foam, PU, rubber (EDPM etc.), elastomeric thermoplastics, of TPE, of polyester, notably of single-component polyester rubber.

5. The luminous multiple glazing unit of a door of furniture notably refrigerated as claimed in one of the preceding claims, **characterized in that** the diode support (3) at least is provided, advantageously prior to its integration in the glazing unit, with at least one layer for humidity protection (5') and/or with an encapsulation (5') such as a varnish of the silicone, epoxy or acrylic type.

6. The luminous multiple glazing unit of a door of furniture notably refrigerated as claimed in one of the preceding claims, **characterized in that** means for holding the cap in position are separate from means for positioning the cap and/or means for holding the source support in position are separate from means for positioning the source support (61, 64).

7. The luminous multiple glazing unit of a door of furniture notably refrigerated as claimed in one of the preceding claims, **characterized in that** the distance between the emitting face or zone (2) and the injection edge (10) is controlled by means for positioning and means for holding in position called blocking, of the source support (61, 64) in the three directions of an orthogonal frame of reference (XYZ), said positioning and blocking means comprising a system for assembly of the source support, joined to the first sheet, including the assembly element (7) positioned relative to the injection edge, the system for assembly of the source support preferably including the cap (4).

8. The luminous multiple glazing unit of a door of furniture notably refrigerated as claimed in one of the preceding claims, **characterized in that** the assembly element (7):
- is a monolithic annular component, notably of plastic that is sufficiently rigid
- or is a component in several separate parts, notably of plastic that is sufficiently rigid
- or is of a material with a local recess for housing the source, notably of plastic that is sufficiently rigid.

9. The luminous multiple glazing unit of a door of furniture notably refrigerated (700) as claimed in one of the preceding claims, **characterized in that** the source support (3) is positioned in the assembly element (6) by the positioning means, notably one or more stops, and cap (4) comprises or interacts with elements (40'), which in the assembled position of the cap, are the means for holding the source support in position in the assembly element, notably by bearing on the support.

10. The luminous multiple glazing unit of a door of furniture notably refrigerated as claimed in one of the preceding claims, **characterized in that** the cap (4) carries the source support (3), notably with stops, interference-fit connection, and the means for holding the source support in position are the means for holding the cap in position on the assembly element.

11. The luminous multiple glazing unit of a door of furniture notably refrigerated (900) as claimed in one of claims 1 to 8, **characterized in that** assembly of the cap (4), optionally carrying the source support (3) or carrying holding in position of the prepositioned source support, is by rotation and reversible fixation.

12. The luminous multiple glazing unit of a door of furniture notably refrigerated as claimed in one of the preceding claims, **characterized in that** the cap (4) and the framing, notably the assembly element (7), are of roughly identical material, of metal or of plastic.

13. The luminous multiple glazing unit of a door of furniture notably refrigerated as claimed in one of claims 1 to 12, **characterized in that** the framing, notably the assembly element (7), is a functional element which is a metal core of a preassembled seal, hollowed out locally, optionally covered with a polymer material.

14. The luminous multiple glazing unit of a door of furniture notably refrigerated as claimed in one of claims 1 to 13, **characterized in that** the diodes (2) have lateral emission.

15. Door of furniture refrigerated incorporating the luminous multiple glazing as claimed in one of the preceding claims.
